# EUROPÄISCHE PATENTSCHRIFT

(11) **EP 1 440 986 B1**
(45) Veröffentlichungstag und Bekanntmachung des Hinweises auf die Patenterteilung: **25.11.2009**
(21) Anmeldenummer: 03029348.4
(22) Anmeldetag: 19.12.2003
(51) Int. Cl.: C08F 6/00, C08J 3/00

(54) **Verfahren zur kontinuierlichen Trocknung von N-bzw. Amino-, Ammonium- oder spirobicyclische Ammoniumgruppen haltigen Polymeren**
Continuous process for drying of N- or amino or ammonium or spirobicyclic ammonium groups containing polymers
Procédé de séchage en continu de polymères contenant des groupes N- ou amino ou ammonium ou ammonium spirobicyclique

(30) Priorität: 15.01.2003 AT 422003
(43) Veröffentlichungstag der Anmeldung: 28.07.2004
(73) Patentinhaber: DSM Fine Chemicals Austria Nfg GmbH & Co KG, 4021 Linz (AT)
(72) Erfinder: Stanek, Michael, 4020 Linz (AT); Häubl, Georg, 4040 Linz (AT); Raml, Walter, 4202 Hellmonsödt (AT); Steinwender, Erich, 4040 Linz (AT)
(74) Vertreter: Habets, Winand

(56) Entgegenhaltungen:
- EP-A- 0 926 162
- WO-A-03/031501
- DE-A- 2 632 054
- HOLMES-FARLEY S R ET AL: "COLESEVELAM HYDROCHLORIDE: SYNTHESIS AND TESTING OF A NOVEL POLYMER GEL PHARMACEUTICAL" POLYMER PREPRINTS, AMERICAN CHEMICAL SOCIETY, US, Bd. 41, Nr. 1, 2000, Seiten 735-736, XP009022552 ISSN: 0032-3934

## Beschreibung

Die Erfindung betrifft ein Verfahren zur kontinuierlichen Trocknung von N-bzw. Amino-, Ammonium- oder spirobicyclische Ammoniumgruppen haltigen Polymeren, die beispielsweise in der Medizin zur Senkung des Cholesterinspiegels durch Bindung der Gallensäuren bzw. von Gallensäuresalzen eingesetzt werden.

N-bzw. Amino-, Ammonium- oder spirobicyclische Ammoniumgruppen-haltige Polymere sind Polymere mit kationischen Gruppen und geeigneten Gegenionen, die gegebenenfalls hydrophobe Gruppen enthalten können. Die kationischen Gruppen leiten sich dabei beispielsweise von Aminen oder Ammoniumgruppen ab.
Hydrophobe Gruppen sind beispielsweise N- bzw. Amin- oder Ammoniumgruppenhaltige Seitenketten oder Alkylseitenketten, die durch chemische Reaktion mit dem Polymernetzwerk kovalent verknüpft sind.

Geeignete Polymer sind bereits aus dem Stand der Technik, beispielsweise aus WO 01/25291, WO 00/32656, WO 00/38664, WO 99/33452, WO 99/22721, WO 98/43653, WO 02/48209, WO 02/22695, US 5 624 963, US 5 496 545 , bekannt.

Die Herstellung dieser Polymere erfolgt analog dem Stand der Technik, durch Polymerisation der entsprechenden Monomere, wobei die Vernetzung entweder durch Zugabe des Vernetzers zum Reaktionsgemisch während der Polymerisation oder im Anschluss an die Polymerisationsreaktion erfolgt. Nach der entsprechenden Gelierzeit werden die erhaltenen Gele gegebenenfalls geschnitten bzw. zerkleinert und gewaschen. Anschließend erfolgt gegebenenfalls eine polymeranaloge Umsetzung, wie eine Alkylierung der in Gelform erhaltenen Polymere, die sodann wiederum in mehreren Schritten gewaschen und abschließend getrocknet werden.

Gemäß dem Stand der Technik erfolgt die Trocknung der feuchten Gele, die bis zu 90% an Wasser gebunden haben, beispielsweise durch Kontakttrocknung. Bei dieser Variante wird die für die Wasserverdampfung notwendige Energie durch den direkten Kontakt von Produkt mit der Heizfläche übertragen. Für die Trocknungsgeschwindigkeit ist dabei die Temperaturdifferenz zwischen Heizflächentemperatur und Produkttemperatur maßgebend.
Während der Trocknung nimmt das Volumen des Polymergeles stark ab. Dies wirkt sich negativ auf den Wärmeübergang Produkt/Heizfläche aus, da je nach Bauart des Trockners nicht mehr die ganze Heizfläche für den Energieübertrag zur Verfügung steht. Um die vorhandene Heizfläche weitgehend zu nutzen, kann während der Trocknung feuchtes Gel zugegeben werden und somit das Volumen des Trockengutes konstant gehalten werden. Dies bedingt jedoch eine längere Verweilzeit im Trockner. Längere Verweilzeiten wirken sich wiederum negativ auf die Produktqualität aus. Der Tagesdurchsatz bei Kontakttrocknern ist zudem relativ gering.
Ein weiterer Nachteil von Kontakttrocknern ist, dass es zu Produktverkrustungen an der Heizfläche kommt, wodurch ebenfalls die Produktqualität durch höhere Temperaturbelastung beeinträchtigt wird. Weiters verschlechtert sich mit zunehmender Verkrustung der Wärmeübergang, wodurch die Trocknungsleistung sinkt.

Eine weitere aus dem Stand der Technik bekannte Trocknungsvariante für Polymergele stellt die Trocknung im Umluftofen dar. Auch bei dieser Variante ist der Wärmeübergang unzureichend. Zudem sind Umluftöfen (Trockenschränke) nur für den Labormaßstab und nicht für die Anwendung im industriellen Maßstab geeignet.

Nachteilig auf die Produktqualität wirkt sich bei bisher verwendeten Trocknungsverfahren auch die Anwesenheit von Sauerstoff aus, da es leicht zu Verfärbungen des Gels und zum Anstieg von Verunreinigungen, wie Decylamin oder Didecylamin kommt.

In WO 031031501 Beispiel 3c ist die batchweise Trocknung eines Polymergels mit 97,2 Gew.% Wassergehalt in der Wirbelschicht beschrieben. Nachteilig bei diesem Verfahren ist, dass das Polymer nach einer gewissen Zeit aggiomeriert und der Trockenvorgang unterbrochen werden muss, um das verklumpte Produkt, das nunmehr einen Wassergehalt von 43 Gew.% aufweist, wieder zu zerkleinern. Erst dann kann der Trockenvorgang fortgesetzt werden. Es handelt sich hierbei somit um ein zweistufiges, batchweise durchgeführtes Trocknungsverfahren.

EP 0 926 162 beschreibt ebenfalls eine zweistufige, batchweise durchgeführte Trocknung von Hydrogelen mit einem Wassergehalt von 50 bis 80 Gew.%. Im ersten Schritt wird das Gel im statischen Zustand vorgetrocknet, bis es einen Wassergehalt von 8 bis 20 Gew.% aufweist. Da das Gel dabei zusammenklumpt, muss es vor der weiteren Trocknung wieder zerkleinert werden. Im zweiten Schritt erfolgt sodann die vollständige Trocknung, beispielsweise in einer batchweise durchgeführten Wirbelschichttrocknung.

Aus DE 26 32 054 ist bekannt, dass chlorierte Polymere mit einem Wassergehalt 50 bis 70 Gew.% in einem zweistufigen, batchweise durchgeführten Trocknungsverfahren in der Wirbelschicht getrocknet werden können.
Dabei wird das entsprechende Polymere zuerst in der ersten Wirbelschichizone vorgetrocknet, dann beispielsweise mittels einer Schnecke in eine zweite Apparatur überführt wird, wo das Polymer fertig getrocknet wird. Gegebenenfalls können noch weitere Trocknungseinheiten angeschlossen werden.

Aufgabe der Erfindung war es demnach ein geeignetes Trocknungsverfahren für N-bzw. Amino-, Ammonium- oder spirobicyclische Ammoniumgruppen-haltige Polymere zu finden, das auf einfache Weise eine hohe Produktqualität bei gleichzeitig erhöhtem Tagesdurchsatz gewährleistet.
Unerwarteterweise konnte diese Aufgabe durch die kontinuierliche Trocknung in der Wirbelschicht gelöst werden.

Gegenstand der Erfindung ist demnach ein Verfahren zur kontinuierlichen Trocknung von N- bzw. Amin-, Ammonium- oder spirobicyclische Ammoniumgruppenhaltigen Polymeren, enthaltend kationische N-haltige Gruppen, sowie geeignete Gegenionen, das dadurch gekennzeichnet ist, dass die durch Polymerisation, Vernetzung und gegebenenfalls Alkylierung erhaltenen, ausgelierten und gewaschenen Polymere, die bis zu etwa 90% Wasser gebunden haben können, kontinuierlich in einer Wirbelschicht getrocknet werden, wobei ein gasförmiges Medium unter Normaldruck oder Überdruck in einen Wirbelschichttrockner eingeblasen und das Polymergel kontinuierlich in den Wirbelschichttrockner eingebracht wird, worauf es durch das eingeblasene gasförmige Medium zur Auflockerung des Feuchtproduktes und anschließend zur Ausbildung eines konstanten Wirbelbettes kommt und abschließend soviel an getrocknetem Polymergel, das einen Wassergehalt von 2 bis 5% aufweist, kontinuierlich aus dem Wirbelschichttrockner entnommen wird, sodass eine gleich bleibende Wirbelschichtmenge im Trockner verbleibt.

Bei dem erfindungsgemäßen Verfahren werden N- bzw. Amin-, Ammonium- oder spirobicyclische Ammoniumgruppenhaltige Polymere getrocknet.
Bei diesen Polymeren handelt es sich um Polymere, die beispielsweise in WO 01/25291, WO 00/32656, WO 00/38664, WO 99/33452, WO 99/22721, WO 98/43653, WO 02/48209, WO 02/22695, US 5 624 963 und US 5 496 545 oder in Polymer Preprints 2000, 41(1), 735 beschrieben sind.

Für das erfindungsgemäße Trocknungsverfahren eignen sich insbesondere kationische Polymere. Zu den kationischen Polymeren gehören solche Polymere, die ein Amin-N-Atom enthalten wie primäre, sekundäre oder tertiäre Amingruppen oder Salze davon, quaternäre Ammoniumgruppen und/oder spirobicylische Ammoniumgruppen enthalten. Zusätzliche kationische Gruppen beinhalten Amidino, Guanidino, Imino.

Das kationische Polymer zeichnet sich dadurch aus, dass es beim physiologischen pH-Wert eine positive Ladung aufweist.
Beispiele für geeignete kationische Polymere beinhalten Polyvinylamine, Polyallylamine, Polydiallylamine, Polyvinylimidazole, Polydiallylalkylamine, Polyethylenimine, , sowie Polymere enthaltend die aus beispielsweise WO 00/32656, Seite 7f., WO 98/43653, Seite 4f.; US 5,496,545, Spalte 2 bis 4; US 5,624,963; WO 98/29107 bekannten, sich wiederholenden Einheiten.
Das kationische Polymer kann gegebenenfalls noch mit einem hydrophoben Polymer bzw. einer hydrophoben Komponente, wie in WO 98/43653, WO 99/33452 oder WO 99/22721 u.s.w. beschrieben, kombiniert werden.
Die eingesetzten Polymere sind zudem vernetzt. Die Vernetzung kann dabei bereits während der Polymerisation oder aber auch erst im Anschluss an die Polymerisation durchgeführt werden. Geeignete Vernetzungsmittel beinhalten die aus dem bereits zitierten Literaturstellen bekannten Vernetzungsmittel. Beispiele dafür sind Epichlorhydrin, Succinyldichlorid, Ethylendiamin, Toluoldiisocyanat, Diacrylate, Dimethacrylate, Methylenbisacrylamide, Dichlorethan, Dichlorpropan.
Die für das erfindungsgemäße Verfahren eingesetzten Polymere weisen weiters negativ geladene Gegenionen auf. Diese Gegenionen können organische oder anorganische Ionen oder Kombinationen davon sein. Geeignete Gegenionen beinhalten ebenfalls die aus dem bereits zitierten Stand der Technik bekannten Gegenionen. Beispiele für geeignete anorganische Ionen sind Halogenide, insbesondere Chlorid, Phosphate, Phosphite, Carbonate, Bicarbonate, Sulfate, Bisulfate, Hydroxide, Nitrate, Persulfate, Sulfite und Sulfide. Beispiele für geeignete organische Ionen sind Acetate, Ascorbate, Benzoate, Lactat, Fumarat, Maleat, Pyruvat, Citrate, Dihydrogencitrate, Hydrogencitrate, Propionat, Butyrat, Oxalate, Succinate, Tartrate, Cholate.

Im Anschluss an die Polymerisation, Vernetzung und Gelierzeit werden die entsprechenden Polymergele gegebenenfalls geschnitten bzw. zerkleinert, gegebenenfalls alkyliert und abschließend gewaschen.

Die Herstellung der Polymere erfolgt gemäß dem Stand der Technik, wie in WO 99/33452, WO 99/22721, WO 98/43653, WO 02/48209, WO 02/22695, US 5 624 963 und US 5 496 545 oder in Polymer Preprints 2000, 41(1), 753 beschrieben.

Die gemäß dem Stand der Technik in Gelform erhaltenen, feuchten Polymere werden sodann erfindungsgemäß getrocknet.

Bei der erfindungsgemäßen Trocknung wird ein gasförmiges Medium, wie gasförmiger Stickstoff; Luft oder ein Gemisch derselben, auf 40°C -250°C, bevorzugt von 100° bis 160°C erwärmt und von unten über einen Siebboden, bevorzugt einen Konidurboden (Lochboden) mit gerichteter Strömung in Richtung Trocknerausgang in den Wirbelschichttrockner eingeblasen. Die Bewegung des Produktes in der Wirbelschicht in Richtung Trocknerausgang kann jedoch auch mechanisch, beispielsweise über einen Rüttelboden, erfolgen.
In Abhängigkeit von der Teilchengröße und dem spezifischen Gewicht des zu trocknenden Polymergels kommt es bei einer bestimmten Gasgeschwindigkeit zur Auflockerung des Feuchtproduktes, Ausbildung einer Wirbelschicht und bei weiterer Steigerung der Gasgeschwindigkeit zum Produktaustrag. Zwischen diesen beiden Punkten, d.h. zwischen Lockerung und Austragung, wird die Wirbelschicht betrieben, wobei die Gasgeschwindigkeit in Abhängigkeit vom Partikeldurchmesser anzupassen ist. Je schwerer und größer das Teilchen bzw. der Partikeldurchmesser, desto höher sollte die Gasgeschwindigkeit sein.
Für Polymergele mit einem Partikeldurchmesser der feuchten Gelteilchen (Feuchtigkeit 85%) von beispielsweise 0,1mm bis 6mm liegt die zur Auflockerung bevorzugte Gasgeschwindigkeit (Temperatur des Gases 80°C) erfindungsgemäß zwischen 0,02m/sec und 3,5m/sec und die Austragsgeschwindigkeit erfindungsgemäß zwischen 0,29m/sec und 13,5m/sec.

Bevorzugt wird bei der erfindungsgemäßen Trocknung eine Gasgeschwindigkeit von 1-3m/sec, besonders bevorzugt von 1,5-2,5m/sec eingestellt.

In der Wirbelschicht bildet sich sodann ein weitgehend konstantes Wirbelbett aus, die Höhe des Wirbelbettes kann dabei durch die eingebrachte Produktmenge variiert werden, wodurch die Verweilzeit im Wirbelschichttrockner beeinflusst wird. Je mehr zu trocknendes Gel eingebracht wird, umso höher ist das Wirbelbett und umso länger ist die Verweilzeit des Gels im Trockner.

Die Wirbelschicht kann aber auch mit verschiedenen Temperaturzonen mit unterschiedlichen Gasgeschwindigkeiten betrieben werden. So können beispielsweise am Trocknereingang höhere Temperaturen und höhere Gasgeschwindigkeiten und im Bereich des Trocknerausganges niedrigere Temperaturen und niedrigere Gasgeschwindigkeiten eingestellt werden.

Die Produktzufuhr, d.h. die Zufuhr des zu trocknenden Polymergels, das bis zu 90% Wasser gebunden haben kann, und die Produktentnahme, d.h. die Entnahme des getrockneten Polymergels erfolgt erfindungsgemäß kontinuierlich, wobei bei der Produktentnahme die Gewichtsreduktion berücksichtigt werden muss, damit sich im Trockner eine gleichbleibende Wirbelschichtmenge befindet. So kann beispielsweise bei einem Gel mit 85% Feuchtigkeit ein Siebtel der eingebrachten Menge entnommen werden.
Die Einbringung kann dabei beispielsweise über eine Doppelpendelklappe, einem Nibbler oder einem statischen Sieb mit Rotor erfolgen.

Es ist beim Start der Wirbelschicht auch möglich, bereits getrocknetes Material als Grundschicht in den Trockner vorzulegen.

Die erfindungsgemäße Wirbelschichttrocknung erfolgt bei Normaldruck oder bei leichtem Überdruck.

Infolge des guten Wärmeüberganges wird Wasser von den feuchten Gelteilchen verdampft, wodurch sich das Gas abkühlt und sich ein Temperaturgefälle von 20-40°C von der Produkteintragung (feuchtes Gel) bis zum Produktaustrag (trockenes Gel) bildet.
Am Trocknerausgang erwärmt sich das Polymergel auf 60 bis 120°C, bevorzugt auf 80 bis 100°C.
Das getrocknete Polymergel weist sodann einen sehr konstanten Wassergehalt von 2 bis 5% auf.

Das feuchte Abgas, mit dem aus der Wirbelschicht gegebenenfalls ausgetragenem Feinanteil, wird zur Abtrennung des Feinanteils über einen im Trockner eingebauten Filtern geführt. Die Abtrennung kann jedoch auch über einen Cyclon mit nachgeschaltetem Feinfilter erfolgen. Der Feinanteil kann gegebenenfalls wieder in den Trockner rückgeführt werden.
Das feuchte Abgas, das eine Temperatur von 70 bis 100°C aufweist, wird sodann über einen Kondensator geleitet und auf 5 bis 35°C, bevorzugt auf 10 bis 30°C gekühlt. Anschließend wird das Gas mit 100% Sättigung wieder auf 40°C -250°C, bevorzugt auf 100° bis 160°C erwärmt und erneut in den Wirbelschichttrockner eingeleitet.

Die Verweilzeit der Polymere im Trockner ist abhängig vom Produktgewicht in der Wirbelschicht und liegt bei dem erfindungsgemäßen Verfahren zwischen 5 und 12 Stunden.

Durch das erfindungsgemäße Verfahren können N- bzw. Amin-, Ammonium- oder spirobicyclische Ammoniumgruppenhaltige Polymere mit einer im Vergleich zum Stand der Technik wesentlich geringeren Verweilzeit und Temperaturbelastung, bei deutlich erhöhtem Tagesdurchsatz getrocknet werden, wobei gleichzeitig eine hohe Produktqualität, d.h. keine Nebenproduktbildung und keine Verfärbung, gewährleistet wird.

Das erfindungsgemäße Verfahren eignet sich insbesondere zur Trocknung von Polymeren, die vernetzt sind und kationische N-haltige bzw. Amin-, Ammonium- oder spirobicyclische Ammonium-Gruppen, sowie geeignete Gegenionen enthalten. Bevorzugt wird das Verfahren jedoch zur Trocknung von vernetzten und alkylierten Polyallylaminen und Polydiallylaminen mit N-haltigen bzw. Amin-, Ammonium- oder spirobicyclische Ammonium-Gruppen eingesetzt.

### Beispiel 1:

Es wurde die Abhängigkeit der Gasgeschwindigkeit bei der Auflockerung des feuchten Gels und die Austraggeschwindigkeit von der Teilchengröße der feuchten Gelteilchen ermittelt.
Dazu wurde 80°C warmes N₂-Gas über einen Conidurboden in einen Wirbelschichttrockner, in welchem eine Wärmeübergangszahl von 200-350W/°Km² erreicht wird, eingebracht. Als zu trocknendes Gel wurde Colesevelam Hydrochlorid, hergestellt analog Polymer Preprint 2000, 41(1), 753, verwendet. (ρ = 1050 kg/m³) Die Volumskontraktion von Colesevelam HCl feucht auf Colesevelam HCl trocken wurde mit einer Feuchtigkeit von 85% berechnet.

| d feucht mm _{(Durchmessser)} | V _{Lockerung} m/sec | V _{Austrag} m/sec | d trocken mm _{(Durchmessser)} | V _{Lockerung} m/sec | V _{Austrag} m/sec |
|---|---|---|---|---|---|
| 0,119 | 0,042 | 0,291 | 0,063 | 0,012 | 0,096 |
| 0,236 | 0,156 | 0,824 | 0,125 | 0,046 | 0,316 |
| 0,471 | 0,480 | 1,926 | 0,250 | 0,17 | 0,89 |
| 0,94 | 1,016 | 3,77 | 0,5 | 0,52 | 2,05 |
| 1,88 | 1,68 | 6,53 | 1 | 1,07 | 3,98 |
| 3,77 | 2,52 | 10,46 | 2 | 1,74 | 6,83 |
| 5,64 | 3,12 | 13,41 | 3 | 2,22 | 9,02 |

### Beispiel 2:

300 kg/h feuchtes Colesevelam Hydrochlorid, hergestellt analog Polymer Preprint 2000, 41(1), 753 mit einer max. Korngröße von 4mm und 85% Wassergehalt wurde kontinuierlich in einen Wirbelschichttrockner eingebracht. N₂-Gas wurde auf 130°C erwärmt und bei Normaldruck mit einer Geschwindigkeit von 1,5-2,5 m/sec von unten in den Trockner eingeblasen. In der Wirbelschicht bildete sich ein weitgehend konstantes Wirbelbett mit einer gleichbleibenden Wirbelschichtmenge von 300 bis 400 kg/m² Konidurbodenfläche (Konidurbodenfläche 2,5m²) aus. Das Temperaturgefälle vom Produkteintrag bis zum Produktaustrag betrug 30°C.
Es wurden 45 kg/h Coleveselam HCl trocken entnommen
Die Temperatur des trockenen Colesevelam HCl's betrug 85-90°C und der Wassergehalt 2-5%.
Die Verweilzeit betrug 6,6h bis 8,8h
Das feuchte Abgas mit einer Temperatur von 80-85°C und einem Wassergehalt von 40-60 g/m³ wurde über einen Kondensator geleitet und auf 25°C abgekühlt. Der Wassergehalt nach dem Kondensator betrug 17-30g/m³. Das Gas wurde sodann mit 100% Sättigung wieder erwärmt und erneut in den Trockner eingeblasen.
Tagesdurchsatz: 1080kg

Vergleichsbeispiel: Trocknung von Colesevelam HCl feucht in zwei 4 m³ Konustrockner.

Im einem ersten Konustrockner wurde die Trocknung von 10.000 kg Colesevelam feucht (Volumen von ca. 15 m³) soweit durchgeführt, bis das Volumen max. 4m³ betrug.
Die Heiztemperatur wurde auf 120-130°C eingestellt und die Trocknung unter Vakuum von 30-50 mbar durchgeführt. Dabei stieg die Produkttemperatur auf 45°C.
Die Trocknungsdauer betrug 85 Stunden.
Zuerst wurden 2000 kg Feuchtprodukt in den Trockner eingebracht. Dann erfolgte innerhalb von 70-80 Stunden die weitere Zugabe von den restlichen 8000 kg Feuchtprodukt.

Nach Abnahme des Volumens auf < 4m³, wurde die Trocknung im ersten Trockner beendet und das Produkt in den zweiten Trockner übergeführt.
Dort erfolgte die Trocknung ohne Feuchtproduktzugabe bis zu einem Wassergehalt von 4%.

Die Heizmanteltemperatur betrug am Beginn 120-130°C und wurde gegen Ende der Trocknung auf 70°C abgesenkt, um eine Überhitzung von Colesevelam·HCl zu vermeiden. Das Vakuum während der Trocknung betrug 50-100 mbar und war abhängig von der Filterreinigung während der Trocknung.
Trocknungsdauer 80 -90 Stunden. Somit ergab sich eine Trocknungsleistung von 400 kg Colesevelam HCl trocken/Tag

## Patentansprüche

1. Verfahren zur kontinuierlichen Trocknung von N- bzw. Amin-, Ammonium- oder spirobicyclische Ammoniumgruppenhaltigen Polymeren, enthaltend kationische N-haltige Gruppen, sowie geeignete Gegenionen, **dadurch gekennzeichnet, dass** die durch Polymerisation, Vernetzung und gegebenenfalls Alkylierung erhaltenen, ausgelierten und gewaschenen Polymere, die bis zu 90% Wasser gebunden haben können, kontinuierlich in einer Wirbelschicht getrocknet werden, wobei ein gasförmiges Medium unter Normaldruck oder Überdruck in einen Wirbelschichttrockner eingeblasen und das Polymergel kontinuierlich in den Wirbelschichttrockner eingebracht wird, worauf es durch das eingeblasene gasförmige Medium zur Auflockerung des Feuchtproduktes und anschließend zur Ausbildung eines konstanten Wirbelbettes kommt und abschließend soviel an getrocknetem Polymergel, das einen Wassergehalt von 2 bis 5% aufweist, kontinuierlich aus dem Wirbelschichttrockner entnommen wird, sodass eine gleich bleibende Wirbelschichtmenge im Trockner verbleibt.

2. Verfahren nach Anspruch 1, **dadurch gekennzeichnet, dass** das gasförmige Medium auf 40 bis 250°C erwärmt und über einen Siebboden mit gerichteter Strömung in Richtung Trocknerausgang in einen Wirbelschichttrockner eingeblasen wird.

3. Verfahren nach Anspruch 2, **dadurch gekennzeichnet, dass** das gasförmige Medium mit einer Geschwindigkeit von 0,02m/sec bis 3,5m/sec in den Wirbelschichttrockner eingeblasen wird.

4. Verfahren nach Anspruch 1, **dadurch gekennzeichnet, dass** sich das Polymergel bis zum Trocknerausgang auf 60 bis 120°C erwärmt.

5. Verfahren nach Anspruch 1, **dadurch gekennzeichnet, dass** das feuchte Stickstoffabgas, das eine Temperatur von 70 bis 100°C aufweist, zur Abtrennung des Feinanteiles über einen im Trockner befindlichen Filter oder über einen Cyclon mit nachgeschaltetem Feinfilter geführt wird, sodann über einen Kondensator geleitet, auf 5 bis 35°C gekühlt und anschließend mit 100%Sättigung wieder auf 40 bis 250°C erwärmt und erneut in den Wirbeischichttrockner eingeleitet wird.

6. Verfahren nach Anspruch 1, **dadurch gekennzeichnet, dass** im Trockner verschiedene Temperaturzonen mit unterschiedlichen Gasgeschwindigkeiten eingestellt werden.

7. Verfahren nach Anspruch 1, **dadurch gekennzeichnet, dass** die Einbringung des Produktes über eine Doppelpendelklappe, über einen Nibbler oder ein statisches Sieb mit Rotor erfolgt.

8. Verfahren nach Anspruch 1, **dadurch gekennzeichnet, dass** getrocknetes Produkt als Grundschicht in den Trockner vorgelegt wird.

## Claims

1. Process for the continuous drying of polymers containing N or amino, ammonium or spirobicyclic ammonium groups, comprising cationic N-containing groups, and suitable counterions, **characterized in that** the gelled and washed polymers which are obtained by polymerization, crosslinkage and optionally alkylation and can have up to 90% of bound water are continuously dried in a fluidized bed, a gaseous medium being injected under normal pressure or overpressure into a fluidized bed dryer and the polymer gel being introduced continuously into the fluidized bed dryer, whereupon owing to the gaseous medium injected in, loosening of the moist product and then the formation of a constant fluidized bed occurs and finally sufficient dried polymer gel, which has a water content of 2 to 5%, is removed continuously from the fluidized bed dryer such that a constant amount of fluidized bed remains in the dryer.

2. Process according to Claim 1, **characterized in that** the gaseous medium is heated to 40 to 250°C and injected into a fluidized bed dryer through a sieve bottom having a directed flow in the dryer exit direction.

3. Process according to Claim 2, **characterized in that** the gaseous medium is injected into the fluidized bed dryer with a velocity of 0.02 m/sec to 3.5 m/sec.

4. Process according to Claim 1, **characterized in that** the polymer gel is heated to 60 to 120°C at the dryer exit.

5. Process according to Claim 1, **characterized in that** the moist nitrogen waste gas, which has a temperature from 70 to 100°C, is led for the separation of the fine fraction through a filter situated in the dryer or through a cyclone separator having a fine filter connected in series, then led through a condenser, cooled to 5 to 35°C and then heated again to 40 to 250°C with 100% saturation and again led into the fluidized bed dryer.

6. Process according to Claim 1, **characterized in that** various temperature zones having different gas velocities are established in the dryer.

7. Process according to Claim 1, **characterized in that** the introduction of the product is carried out via a double pendulum flap, via a nibbler or a static sieve with a rotor.

8. Process according to Claim 1, **characterized in that** dried product is introduced into the dryer as a base layer.

## Revendications

1. Procédé pour le séchage en continu de polymères contenant des groupes azotés ou amino, ammonium ou ammonium spirobicycliques, qui contiennent des groupes azotés cationiques ainsi que des ions opposés appropriés, **caractérisée en ce que** les polymères obtenus par polymérisation, réticulation et éventuellement alkylation, complètement gélifiés et lavés, qui peuvent comporter jusqu'à 90 % d'eau liée, sont séchés en continu dans un lit fluidisé, procédé dans lequel un milieu gazeux est insufflé sous la pression normale ou sous une surpression dans un sécheur à lit fluidisé et le gel de polymère est introduit en continu dans le sécheur à lit fluidisé, à la suite de quoi il traverse le milieu gazeux insufflé pour la dispersion du produit humide et on aboutit ensuite à la formation d'un lit fluidisé constant et enfin est prélevée en continu du sécheur à lit fluidisé une quantité telle de gel de polymère séché, qui présente une teneur en eau de 2 à 5 %, qu'il reste dans le sécheur un quantité constante de lit fluidisé.

2. Procédé selon la revendication 1, **caractérisé en ce que** le milieu gazeux est chauffé à 40-250 °C et est insufflé dans un sécheur à lit fluidisé, à travers un fond perforé, en un flux orienté en direction de la sortie du sécheur.

3. Procédé selon la revendication 2, **caractérisé en ce que** le milieu gazeux est insufflé à une vitesse de 0,02 m/s à 3,5 m/s dans le sécheur à lit fluidisé.

4. Procédé selon la revendication 1, **caractérisé en ce que** le gel de polymère est chauffé à une température de 60 à 120 °C jusqu'à la sortie du sécheur.

5. Procédé selon la revendication 1, **caractérisé en ce que** le gaz rejeté humide contenant de l'azote, qui présente une température de 70 à 100 °C, est envoyé, pour la séparation de la fraction fine, sur un filtre se trouvant dans le sécheur ou sur un cyclone à filtre fin en aval, puis envoyé sur un condenseur, refroidi jusqu'à une température de 5 à 35 °C et ensuite, à saturation à 100 %, chauffé de nouveau jusqu'à 40 à 250 °C et envoyé à nouveau dans le sécheur à lit fluidisé.

6. Procédé selon la revendication 1, **caractérisé en ce que** dans le sécheur sont établies diverses zones de température à différentes vitesses de gaz.

7. Procédé selon la revendication 1, **caractérisé en ce que** l'introduction du produit s'effectue au moyen d'une double vanne à clapet oscillant, d'une découpeuse ou d'un tamis statique à rotor.

8. Procédé selon la revendication 1, **caractérisé en ce que** du produit séché est disposé au préalable en tant que couche de fond dans le sécheur.
